# FASCICULE DE BREVET EUROPEEN

(11) **EP 0 573 366 B1**
(45) Date de publication et mention de la délivrance du brevet: **10.01.1996**
(21) Numéro de dépôt: 93401426.7
(22) Date de dépôt: 03.06.1993
(51) Int. Cl.: E04D 5/10

(54) **Revêtement d'étanchéité de toitures à base de polyisocyanates et d'armature de verre et son procédé de fabrication**
Wasserfestes Dachdeckmaterial auf Basis von Polyisocyanaten und Glasarmatur und Verfahren zur dessen Herstellung
Waterproof roof covering based on polyisocyanates and glass fitting and method for producing the same

(30) Priorité: 04.06.1992 FR 9206784
(43) Date de publication de la demande: 08.12.1993
(73) Titulaire: SMAC ACIEROID, F-78062 Saint Quentin en Yvelines Cédex (FR)
(72) Inventeur: Beritzki, Jeannot, F-94400 Vitry (FR); Netter, Michel, F-75009 Paris (FR); Ovaert, Francis, F-75014 Paris (FR)
(74) Mandataire: Jacobson, Claude

(56) Documents cités:
- EP-A- 0 412 889
- DATABASE WPI Derwent Publications Ltd., London, GB; AN 86-193481 (30) & JP-A-61 126 256 (IDEMITSU PETROCHEM KK) 13 Juin 1986
- DATABASE WPI Derwent Publications Ltd., London, GB; AN 86-295121 (45) & JP-A-61 216 966 (IDEMITSU PETROCHEM KK) 26 Septembre 1986

## Description

L'invention concerne un revêtement d'étanchéité de toitures, dont la fonction est de mettre la construction et l'ensemble du contenu de la construction à l'abri des intempéries, notamment l'eau de pluie et celle provenant de la fusion de la grêle et de la neige.

Pour que cette fonction soit durable, le revêtement doit être le plus résistant possible aux effets : de l'eau de pluie (pure ou polluée), des condensats divers, des dépôts atmosphériques, des températures extrêmes et des variations de température, du rayonnement ultraviolet, des charges statiques produites par les appareils installés sur la toiture, des efforts dynamiques provoqués par l'usage de la toiture (circulation d'entretien de la toiture ou des ouvrages qui y sont placés, circulation des utilisateurs, circulation des véhicules, chocs d'objets divers...), des efforts dynamiques provoqués par le vent, des attaques d'origines animale, bactérienne et végétale, des mouvements d'origines mécanique (tassements, vibrations), thermique (dilatation, retrait) ou hygrométrique (gonflement, retrait) du support sur lequel il est établi ou transmis par ce support, ainsi que de la conjonction de ces phénomènes.

Pour qu'un revêtement d'étanchéité présente un réel intérêt économique, il faut qu'il puisse être installé sur l'ouvrage à protéger dans les conditions normales d'un chantier de construction, c'est-à-dire à l'extérieur, soumis directement aux intempéries et sollicité par le personnel des corps d'état amené à y circuler.

De plus, les exigences de confort des usagers et d'économies d'énergie (chauffage en saison froide, climatisation en saison chaude) conduisent, pour la majorité des constructions, à isoler thermiquement les toitures, cette isolation étant, dans le cas de toiture comportant un revêtement d'étanchéité, généralement obtenue par la mise en place, directement sous le revêtement d'étanchéité, de plaques ou panneaux de matériau isolant thermique.

Un revêtement d'étanchéité constitue un ouvrage continu pouvant être obtenu selon l'une des techniques suivantes :
- application de feuilles à base de bitume, comportant une ou des armatures, assemblées entre elles par recouvrements soudés à la flamme ou collés par bitume fondu à la chaleur, ou de feuilles en matière synthétique (PVC plastifié, EPDM, par exemple) comportant ou non une ou des armatures, assemblées entre elles par recouvrements soudés à l'air chaud, par dissolution au solvant, par une colle appropriée ou par bandes adhésives, le revêtement étant, soit lié au support ou aux ouvrages sous-jacents par colle à chaud ou à froid, disposée de façon continue ou discontinue, ou par fixations mécaniques telles que vis ou clous et rondelles rigides, soit non lié au support et lesté ;
- coulage d'asphalte à chaud en continuité en une ou plusieurs couches superposées ;
- superposition des deux techniques précédentes ; ou
- étalement de composants à l'état liquide en une ou plusieurs couches superposées et constituant une masse étanche solide soit par refroidissement, soit par évaporation de solvants, soit encore par prise chimique, le revêtement pouvant comporter une ou plusieurs armatures disposées sous les couches, entre les couches, enrobées ou imprégnées par les composants liquides.

Le revêtement d'étanchéité suivant l'invention est obtenu selon cette dernière technique, par polymérisation de résines polyisocyanates modifiées, éventuellement chargées, plastifiées et pigmentées, et renforcées par une armature complexe.

Un polymère présente une étanchéité à l'eau, (molécule très polaire), d'autant meilleure que ses composants sont très faiblement voire non polaires, et que sa réticulation est complète diminuant ainsi la mobilité de ses chaînes moléculaires constitutives.

D'autre part, il est connu de réticuler les polyisocyanates par des polyols, des polyamines ou par l'eau, un dégagement de gaz carbonique se produisant dans ce dernier cas.

Les polyols présentent l'inconvénient de réagir plus lentement que l'eau, et par conséquent, leur action en milieu humide s'accompagne d'un dégagement de CO₂. Par contre, les polyamines présentent une bonne réactivité, des vitesses de prise de quelques minutes, et produisent les masses réticulées les moins sensibles à l'humidité (voir par exemple JP-A-61 216 966).

D'autre part, afin d'accroître la résistance à la perforation du revêtement d'étanchéité sous l'effet des charges statiques et des efforts dynamiques, il est souhaitable d'incorporer dans le revêtement une armature qui peut être constituée de tissus ou de non tissés à base de fils de verre ou d'autres matériaux tels que fils de polyester ou de polypropylène. L'armature la plus favorable est un matériau complexe connu associant une grille de verre surmontée d'un voile de verre.

Une grille de verre est constituée d'un ensemble de fils de verre orientés dans deux directions perpendiculaires, régulièrement espacés, les fils de trame étant simplement posés sur les fils de chaîne, et collés à ceux-ci à leurs intersections. Un voile de verre consiste en fibres de verre enchevêtrées et collées, c'est-à-dire notamment en un feutre ou un mat de verre.

Cependant, toute autre armature comportant des mailles de petites dimensions peut être utilisée.

Un problème critique rencontré dans la fabrication des revêtements d'étanchéité de toitures est la consommation excessive de masse étanche. Pour résoudre ce problème, il convient en particulier que le voile de verre soit imprégné de masse étanche, celle-ci ne devant pas s'écouler sous la grille de verre. Cet effet pourrait être obtenu en utilisant une masse étanche dont la prise chimique serait très rapide, mais cette rapidité est incompatible avec un étalement convenable. On pourrait également envisager la mise en oeuvre d'une masse étanche de viscosité élevée, mais la difficulté d'incorporation des charges en serait accrue, ainsi que la durée de fabrication, et la capacité d'étalement d'une telle masse étanche est trop limitée. C'est la raison pour laquelle on incorpore des agents mouillants dispersants.

Pour éviter le passage du matériau liquide au travers de l'armature, il semblerait logique d'utiliser des mouillants favorisant la floculation des charges minérales lamellaires et qui donnent ainsi des propriétés intéressantes contre la coulure et la sédimentation. De tels mouillants adaptés aux milieux organiques sont par exemple des dérivés d'acides carboxyliques, des dérivés d'amines ou des dérivés d'alcools.

Or selon l'invention on a trouvé de manière inattendue que l'utilisation d'un agent mouillant défloculant accroît la fluidité et améliore les capacités d'étalement de la masse liquide avant réticulation et de surcroit, en favorisant la sédimentation, permet aux charges lamellaires de se placer de façon telle qu'elles limitent le passage du liquide au travers de l'armature.

La présente invention a donc pour but de fournir un revêtement d'étanchéité de toitures obtenu à partir d'un mélange dont la particularité est d'imprégner l'un des composants de l'armature - p.ex. le voile de verre - et pas l'autre composant de celle-ci - p.ex. la grille de verre -, si cet autre composant est présent, et donc de permettre à la masse étanche d'imprégner totalement l'un composants de l'armature sans qu'il se produise de passage à travers l'armature.

A cet effet, l'invention a pour objet un revêtement d'étanchéïté de toitures suivant la revendication 1.

Suivant d'autres caractéristiques de l'invention, l'armature est une armature complexe constituée d'une grille de verre et d'un voile de verre qui la surmonte, la distance entre deux fils parallèles voisins de la grille de verre est constante et comprise entre 2 et 3 mm, et le grammage du voile de verre est compris entre 30 et 50g/m.

Suivant d'autres caractéristiques encore, les plastifiants sont constitués de phtalates d'alkyle en Cₙ, n étant un nombre entier de 6 à 15 et comprennent avantageusement du phtalate de nonyle et d'undécyle.

Les polyamines utilisées sont des amines aliphatiques ou aromatiques comportant au moins deux groupes amine primaire, de préférence une polyamine aromatique; on peut citer par exemple la diéthylène triamine, la diéthyltoluène diamine, l'isophorone diamine, la méthylène dianiline, la triéthylène tétramine, la triméthyl hexaméthylène diamine.

Un second objet de la présente invention consiste en un procédé de fabrication du revêtement d'étanchéité de toitures défini précédemment, caractérisé en ce que les polyisocyanates et les polyamines ainsi que les autres composants du mélange sont acheminés séparément à l'état liquide en proportions contrôlées soit au moyen de deux pompes doseuses, soit de façon discontinue, mélangés en buse d'injecteur ou en pot à l'aide d'un agitateur, puis appliqués sur l'armature ainsi mélangés.

Cette application des constituants liquides du revêtement s'effectue à froid. Après durcissement, la résine est solidaire de l'armature par sa partie voile de verre.

A titre d'illustration, des formulations de mélanges des revêtements d'étanchéite pour toitures selon la présente invention vont maintenant être décrites, les quantités étant exprimées en poids.

### Formule 1 :

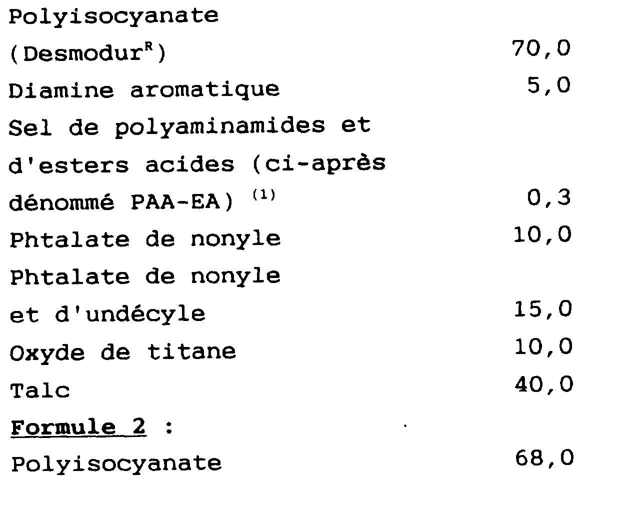

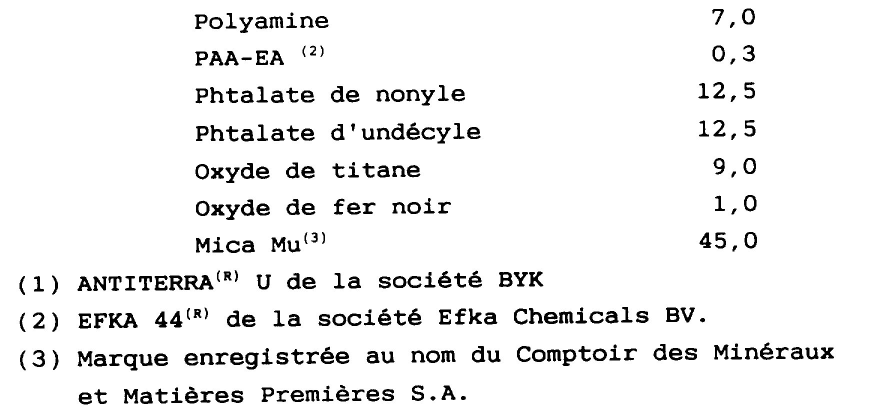

### Formule 3 :

| | |
|---|---|
| Polyisocyanate | 70,0 |
| Polyamine | 5,0 |
| PAA-EA | 0,4 |
| Phtalate de nonyle | 5,0 |
| Phtalate d'undécyle | 5,0 |
| Phtalate de nonyle et d'undécyle | 15,0 |

### Formule 4 :

| | |
|---|---|
| Polyisocyanate | 70,5 |
| Polyamine | 4,5 |
| PAA-EA | 0,3 |
| Phtalate de nonyle | 7,5 |
| Phtalate d'undécyle | 7,5 |
| Phtalate de nonyle et d'undécyle | 10,0 |

Les exemples suivants illustrent également la présente invention.

### Exemple 1

On compare le passage de trois masses étanches, dont la formule ne varie que par l'agent mouillant, à travers une armature complexe consistant en une grille de verre, dont tous les fils parallèles voisins sont distants de 2,5 mm, surmontée d'un voile de verre de 35g/m de grammage.

Dans la suite, les quantités et proportions sont indiquées en poids.

Les polyisocyanates mis en oeuvre dans cet exemple sont à poids moléculaire élevé, avec un poids équivalent de 1 200 environ, soit une teneur pondérale de 3,5% en isocyanate.

Les polyamines mises en oeuvre sont des diamines aromatiques présentant un poids équivalent de 130, soit une teneur pondérale en azote de 11%.

La formule de la première masse étanche est la suivante :

| | |
|---|---|
| Polyisocyanate | 70,0 |
| Diamine | 5,0 |
| Phtalate de nonyle | 10,0 |
| Phatalate de nonyle et d'undécyle | 15,0 |
| Talc | 40,0 |

Dans les seconde et troisième masses étanches, on ajoute 0,2% en poids, par rapport au liant organique, respectivement d'un sel d'ammonium d'un acide polycarboxylique (agent mouillant floculant) et d'un sel de polyaminamides et d'esters acides (agent mouillant défloculant).

Pour évaluer le passage de matière étanche à travers l'armature, on compte le nombre de mailles de la grille remplies.

Par rapport à la masse étanche sans agent mouillant, le taux de passage est 2,5 fois plus élevé lorsque le mouillant est floculant, et 2 fois plus faible lorsque le mouillant est défloculant.

Exemple 2 : un échantillon de revêtement étanche est constitué de 71,5% en poids, des polyisocyanates utilisés à l'exemple précédent, 3,5% en poids des diamines utilisées à l'exemple précédent, et 25% en poids de plastifiants.

Cet échantillon est placé pendant 15 jours dans une étuve à 70°c, sur une plaque de polystyrène expansé (PSE).

En fin d'essai, on observe l'ensemble échantillon de revêtement étanche - plaque de polystyrène. On considère qu'il y a eu attaque de la plaque de polystyrène par l'échantillon quand on observe une perte de masse de l'échantillon qui a dissous le polystyrène et s'est enfoncé dedans.

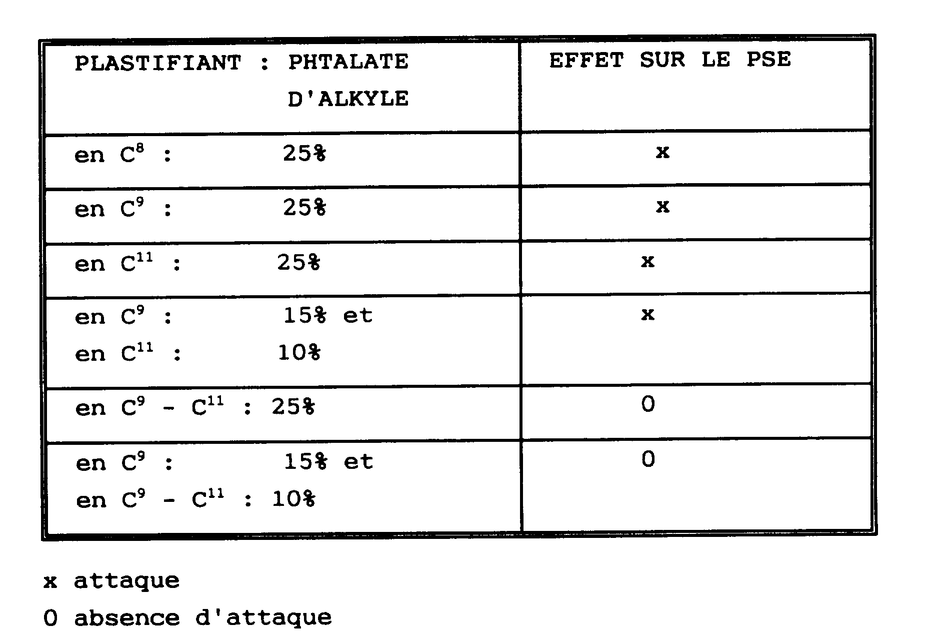

On constate ainsi de façon surprenante l'absence d'attaque dans le cas de la mise en oeuvre d'un plastifiant constitué de phtalate de nonyle et d'undécyle même s'il est mélangé avec un phtalate d'alkyle qui est lui-même agressif vis-à-vis du polystyrène.

Le revêtement d'étanchéité selon l'invention étant d'autre part, appliqué à froid et non à chaud comme les revêtements classiques, il permet l'utilisation du PSE très sensible aux températures élevées, en tant qu'isolant thermique, à condition toutefois de choisir un matériau peu conducteur de chaleur pour le support sur lequel repose le PSE. On préférera ainsi par exemple le béton et la maçonnerie à l'acier, dans le cas d'un environnement pouvant atteindre des températures élevées.

Cet avantage apporté par l'invention est important, en ce sens que le PSE présente à la fois une bonne performance isolante, des caractéristiques mécaniques compatibles avec l'utilisation en toitures (résistance à la compression, à la décohésion, stabilité dimensionnelle) et un prix peu élevé.

D'autre part, le revêtement d'étanchéité suivant l'invention est également compatible avec des isolants thermiques à base de laine de roche.

## Revendications

1. Revêtement d'étanchéité de toitures comprenant un mélange à base de résines de polyisocyanates réticulées par des polyamines et une armature comportant des mailles de petite dimension, ce mélange pouvant contenir en outre :
- 25 à 40% en poids, par rapport au poids de polyisocyanates et de polyamines, de plastifiants, et/ou
- 5 à 20% en poids, par rapport au liant organique constitué des polyisocyanates, polyamines et plastifiants, de pigments minéraux, et/ou
- 25 à 55% en poids, par rapport au liant organique précédemment défini, de farines minérales, caractérisé en ce que ce mélange contient 0,05 à 1,0% en poids, par rapport au liant organique précédemment défini, d'un ou plusieurs agents mouillants défloculants consistant en sels de polyaminamides et d'esters acides.

2. Revêtement d'étanchéité selon la revendication 1, caractérisé en ce que l'armature est une armature complexe constituée d'une grille de verre et d'un voile de verre qui la surmonte.

3. Revêtement selon la revendication 2, caractérisé en ce que la distance entre deux fils parallèles voisins de la grille de verre est constante et comprise entre 2 et 3 mm.

4. Revêtement selon la revendication 2 ou la revendication 3, caractérisé en ce que le grammage du voile de verre est compris entre 30 et 50g/m.

5. Revêtement selon l'une des revendications 1 à 4, caractérisé en ce que les plastifiants sont constitués de phtalates d'alkyle en Cₙ, n étant un nombre entier de 6 à 15.

6. Revêtement selon la revendication 5, caractérisé en ce que les plastifiants comprennent du phtalate de nonyle et d'undécyle.

7. Procédé de fabrication d'un revêtement d'étanchéité de toitures selon l'une quelconque des revendications précédentes, caractérisé en ce que les polyisocyanates et les polyamines ainsi que les autres composants du mélange sont acheminés séparément àl'état liquide en proportions contrôlées soit au moyen de deux pompes doseuses, soit de façon discontinue, mélangés en buse d'injecteur ou en pot à l'aide d'un agitateur, puis appliqués sur l'armature ainsi mélangés.

## Patentansprüche

1. Dichtigkeitsüberzug für Dachbeläge, enthaltend ein Gemisch auf der Basis von mit Polyaminen vernetzten Polyisocyanaten und einer Armierung mit Maschen geringer Größe, wobei das Gemisch ferner enthält:
- 25 bis 40 Gew.% Weichmacher, bezogen auf das Gewicht der Polyisocyanate und Polyamine und/oder
- 5 bis 20 Gew.% mineralische Pigmente, bezogen auf den organischen Binder, der sich aus Polyisocyanaten, Polyaminen und Weichmachern zusammensetzt, und/oder
- 25 bis 55 Gew.% Mineralmehle, bezogen auf den zuvor definierten organischen Binder, dadurch gekennzeichnet, daß das Gemisch 0,5 bis 1 Gew.% eines oder mehrerer entflockender Netzmittel, bezogen auf den zuvor definierten organischen Binder, enthält, die aus Polyaminamidsalzen und Säureestern bestehen.

2. Dichtigketsüberzug nach Anspruch 1, dadurch gekennzeichnet, daß die Armierung eine komplexe Armierung ist, die aus einem Glasgitter und einem dieses überdeckenden Glasmantel besteht.

3. Dichtigkeitsüberzug nach Anspruch 2, dadurch gekennzeichnet, daß die Entfernung zwischen zwei benachbarten parallelen Drähten des Glasgitters konstant ist und zwischen 2 und 3 mm liegt.

4. Dichtigkeitsüberzug nach Anspruch 2 oder 3, dadurch gekennzeichnet, daß das Grammgewicht des Glasmantels zwischen 30 und 50 g/m beträgt.

5. Dichtigkeitsüberzug nach einem der Ansprüche 1 bis 4, dadurch gekennzeichnet, daß die Weichmacher aus Alkylphtalaten mit 6 bis 15 Kohlenstoffatomen gebildet sind.

6. Dichtigkeitsüberzug nach Anspruch 5, dadurch gekennzeichnet, daß die Weichmacher Nonyl- und Undecylphtalat umfassen.

7. Verfahren zur Herstellung eines Dichtigkeitsüberztigs für Dachbeläge nach einem der vorhergehenden Ansprüche, dadurch gekennzeichnet, daß die Polyisocyanate und die Polyamine wie auch die weiteren Bestandteile des Gemischs getrennt im flüssigen Zustand in geregelten Verhältnissen mittels 2 Dosierungspumpen oder diskontinuierlich zugeleitet und in der Spritzdüse oder in einem Gefäß mittels eines Rührers vermischt und dann so vermischt auf die Armierung aufgebracht werden.

## Claims

1. A waterproof roof covering, comprising a mixture based on polyisocyanate resins cross-linked by polyamines and a reinforcement of fine meshwork, which mixture may also contain:
- 25 to 40 wt.% plasticisers, in relation to the weight of polyisocyanates and polyamines, and/or
- 5 to 20 wt.% mineral pigments, in relation to the organic binder comprising polyisocyanates, polyamines and plasticisers, and/or
- 25 to 55 wt.% mineral fillers, in relation to the organic binder defined above,
characterised in that, in relation to the organic binder defined above, this mixture contains 0.05 to 1.0 wt.% of one or more deflocculating wetting agents comprising polyominamide salts and acid esters.

2. A waterproof covering according to claim 1, characterised in that the reinforcement is a complex reinforcement comprising a glass mesh with a glass film over it.

3. A covering according to claim 2, characterised in that the distance between two adjacent parallel filaments of the glass mesh is constant and is between 2 and 3 mm.

4. A covering according to claim 2 or claim 3, characterised in that the grammage of the glass film is between 30 and 50g/m.

5. A covering according to one of claims 1 to 4, characterised in that the plasticisers are Cₙ alkyl phthalates, n being a whole number from 6 to 15.

6. A covering according to claim 5, characterised in that the plasticisers comprise nonyl and undecyl phthalate.

7. A process for the preparation of a waterproof roof covering according to any one of the preceding claims, characterised in that the polyisocyanates, the polyamines and the other constituents of the mixture are brought separately to the liquid state in controlled proportions, either by means of two dosing pumps or discontinuously, mixed in an injection nozzle or a pot by an agitator and then applied, thus mixed, to the reinforcement.
